# EUROPEAN PATENT APPLICATION

(11) **EP 2 186 419 A1**
(43) Date of publication of application: **19.05.2010**
(21) Application number: 08019851.8
(22) Date of filing: 13.11.2008
(51) Int. Cl.: A23F 5/04, A23F 5/00, A23L 1/30, A61K 31/4425

(54) **NMP-containing extract, a method of its production and uses thereof**

(71) Applicant: Tchibo GmbH, 22297 Hamburg (DE); Technische Universität Hamburg, 21073 Hamburg (DE); Technische Universität Kaiserslautern, 67663 Kaiserslautern (DE); Deutsche Forschungsanstalt für Lebensmittelchemie, 85748 Garching (DE); Technische Universität München, 85354 Freising (DE); Karlsruher Institut für Technologie, 76131 Karlsruhe (DE)
(72) Inventor: Bytof, Gerhard, Dr., 22297 Hamburg (DE); Stiebitz, Herbert, 22297 Hamburg (DE); Lantz, Ingo, Dr., 22297 Hamburg (DE); Eggers, Rudolf, Prof. Dr., 21073 Hamburg (DE); Eisenbrand, Gerhard, Prof. Dr., 67663 Kaiserslautern (DE); Somoza, Veronika, Prof. Dr., 85748 Garching (DE); Hofmann, Thomas, Prof. Dr., 85354 Freising (DE); Marko, Doris, Prof. Dr., 76131 Karlsruhe (DE)
(74) Representative: Müller-Boré & Partner Patentanwälte

(57) **Abstract**

The present invention relates to a N-methylpyridinium (NMP)-containing extract, a method for its production, uses of said NMP-containing extract as a dietary supplement and for the prevention or reduction of oxidative stress, and to foodstuff containing said extract.

## Description

The present invention relates to a N-methylpyridinium (NMP)-containing extract, a method for its production, uses of said NMP-containing extract as a dietary supplement and for the prevention or reduction of oxidative stress, and to foodstuff containing said extract.

One fundamental mechanism to guard against cancer, neurodegenerative diseases, aging and atherosclerosis is the protection of cells from reactive oxygen species (ROS)-induced damage. Thus, cells have developed defense mechanisms, such as the induction of the expression of phase II detoxifying enzymes, to prevent from such damages. Phase II enzymes are part of the biotransformation and play a critical role by converting reactive electrophiles or xenobiotics into less toxic products. The balance between the phase I potentially carcinogen-activating and the phase II detoxifying enzymes seems to be critical for the risk to develop cancer. For example, a deficiency in phase II enzyme activity is associated with an increased risk of colon cancer. The expression of many phase II detoxifying genes is regulated by the activation of the antioxidant or electrophile response elements (ARE/EpRE) which are found in the 5'-flanking region of their promoters. ARE, a cis-active element, is activated via binding of the transcription factor Nrf2 (nuclear factor-erythroid 2 p45 subunit (NF-E2)-related factor 2), a member of the Cap'n'Collar (CNC) family of the basic-region leucine zipper (bZIP) proteins. Increased levels of Nrf2 seem to up-regulate the gene expression of these phase II detoxifying enzymes. Under physiological conditions, Nrf2 is sequestered in the cytoplasm in a complex with Keap1, an E3 ubiquitin ligase substrate adaptor. Initiated by ROS or upstream protein kinases, Keap1 inactivation leads to a translocation of Nrf2 into the nucleus, binding to the ARE and the onset of the expression of phase II enzymes. Genes which are regulated by Nrf2 include glutathione S-transferases (GST), UDP-glucuronyltransferases (UGT), γ-glutamate cysteine ligases (γGCL), NAD(P)H-quinone oxidoreductase 1 (NQO1) and heme oxygenase 1 (HO1).

Therefore, Nrf2 plays a crucial role in the regulation of xenobiotic metabolizing enzymes. The identification of food constituents which guard cells from oxidative stress by the activation of the Nrf2/ARE pathway and therefore possess chemoprotective properties, seems to be a promising way to develop functional food.

Thus, the technical problem underlying the present invention is to provide a product or other means for the prevention or reduction of oxidative stress which might be used for example as a dietary supplement.

The solution to the above technical problem is achieved by the embodiments characterized in the claims.

In particular, the present invention relates to a method for producing a N-methylpyridinium (NMP)-containing extract from trigonelline-containing organic material, said extract containing at least 1.9% (w/w) NMP, the method comprising the steps of:
roasting the trigonelline-containing organic material at a temperature of at least 260°C for at least 3 minutes or at a temperature of at least 230°C for at least 4 minutes;
treating the roasted trigonelline-containing organic material with hot water to obtain an aqueous extract;
treating the aqueous extract obtained in step (b) with polyamide; and
applying the polyamide-treated aqueous extract of step (c) to cation exchange chromatography to obtain a NMP-containing extract, and the respective N-methylpyridinium (NMP)-containing extract obtainable by said method.

In a preferred embodiment, the NMP-containing extract of the present invention is a coffee brewed from extremely dark roasted Brasil coffee beans. This coffee is hereinafter sometimes designated as "coffee 5".

The NMP-containing extract obtainable by the present invention contains at least 1.9% (w/w) NMP, more preferably at least 2.5% (w/w) NMP. Further, the NMP-containing extract of the present invention can contain at least 0.1 mg/g isomers of N-methylpicolinium.

The term "N-methylpyridinium (NMP)" as used herein relates to N-methypyridinium in its ionic form, as well as in salt-form, for example as its iodide (NMPI), chloride, hydroxide or sulphate.

In a preferred embodiment, the NMP-containing extract of the present invention contains at most 0.27% (w/w) trigonelline.

In another preferred embodiment, the NMP-containing extract of the present invention contains at most 0.31 % (w/w) chlorogenic acid.

In a still further preferred embodiment, the NMP-containing extract of the present invention contains less than 0.001% (w/w) catechol.

The term "trigonelline-containing organic material" as used herein relates to any naturally occurring material that contains the alkaloid trigonelline.

In general, the trigonelline-containing organic material is selected from the group consisting of coffee, in particular *Coffea arabica, Coffea canephora, Coffea spp.,* and *Psilanthus spp.,* members of the *Fabaceae,* in particular *Pisum sativum, Glycine max, Phaseolus vulgaris, Lens culinaris, Cicer arietinum,* and *Trigonella foenum-graecum,* members of the *Chenopodiaceae,* in particular *Chenopodium quinoa,* and members of the *Poaceae,* in particular *Avena sativa.* In an especially preferred embodiment, the trigonelline-containing organic material is coffee. In an even more preferred embodiment, the coffee is an Arabica Columbia coffee. In another preferred embodiment, the coffee is a Brasil coffee.

Preferably, step (a) of the method of the present invention comprises roasting the trigonelline-containing organic material at a temperature of 260°C for 5 minutes. The temperature and length of time for step (a) of the method according to the present invention is usually adopted to achieve a NMP-content in the roasted trigonelline-containing organic material of at least 1.1 mg NMP per gram of roasted trigonelline-containing organic material.

Step (b) of the method of the present invention comprises treating the roasted trigonelline-containing organic material particularly for 1 to 60 minutes with water having a temperature of 10°C to 100°C, preferably for 5 to 30 minutes with water having a temperature of 50°C to 98°C, more preferably for 10 to 20 minutes with water having a temperature of 70°C to 97°C. In an especially preferred embodiment, step (b) of the method of the present invention comprises treating the roasted trigonelline-containing organic material for 15 minutes with water having a temperature of 90-95°C.

The roasting of the trigonelline-containing organic material as well as the hot water extraction can be carried out by methods well known in the art.

In another preferred embodiment, step (c) of the method of the present invention comprises treating the aqueous extract with polyamide for 1 to 120 minutes, preferably for 10 to 90 minutes, more preferably for 20 to 60 minutes. In an especially preferred embodiment, step (c) of the method of the present invention comprises treating the aqueous extract with polyamide for 30 minutes. Usually, the polyamide-treated aqueous extract is stable at ambient temperature for at least 10 days without the occurrence of precipitates.

The polyamide treatment as well as the cation exchange chromatography can be carried out by methods well known in the art. In a preferred embodiment, the cation exchange chromatography uses a weak cation exchange resin. In a preferred embodiment, this resin is Purolite® C104E resin. In another preferred embodiment, the cation exchange chromatography is carried out according to the column method.

In yet another preferred embodiment, the cation exchange chromatography is carried out according to the batch method.

The method of the present invention can further comprise the steps of filtering the aqueous extract prior to and/or after step (c).

Step (d) of the method according to the present invention can further comprise elution of the NMP-containing extract by 20% aqueous formic acid or 1 M HCl. Elution with 20% aqueous formic acid is especially preferred.

When coffee is used as the trigonelline-containing organic material, the method of the present invention can comprise a step of further extracting an aqueous solution of the extract obtained in step (d) with ethyl acetate to decaffeinate the extract. This step can be carried out by methods well known in the art.

In another aspect, the present invention also relates to the use of said N-methylpyridinium (NMP)-containing extract as a dietary supplement.

In a preferred embodiment, the use of said N-methylpyridinium (NMP)-containing extract as a dietary supplement comprises the daily intake of at least 500 ml of coffee 5 for at least four weeks.

In another aspect, the present invention relates to a pharmaceutical composition comprising, in a therapeutically effective amount, said N-methylpyridinium (NMP)-containing extract according to the present invention, optionally in combination with one or more pharmaceutically acceptable excipient(s) and/or carrier(s) and/or diluent(s) and/or solvent(s) and/or salt(s) and/or buffer(s).

The pharmaceutical composition according to the present invention can have any suitable form that is known in the art. Preferably, it is a solid form, a liquid form or in form of an aerosol. Administration of the pharmaceutical composition according to the present invention can be in any suitable form known in the art, e.g. orally, intravenously, intradermally, intraperitoneally, intramuscularly or by inhalation.

The pharmaceutical composition according to the present invention are suited for the prevention or reduction of oxidative stress and for the prevention or reduction of disorders and/or diseases related to oxidative stress.

In yet another aspect, the present invention relates to a method for the prevention or reduction of oxidative stress and for the prevention of disorders and/or diseases related to oxidative stress, said method comprising administering to a subject a N-methylpyridinium (NMP)-containing extract of the present invention and/or a medicament and/or a pharmaceutical composition of the present invention. Such administration is not subjected to any particular limitations and can be in any form known in the art, e.g. orally, intravenously, intradermal, intraperitoneal or intramuscular. In a preferred embodiment, the subject is a human.

The term "oxidative stress" as used herein relates to any imbalance between the production of reactive oxygen species and a biological system's ability to readily detoxify these reactive oxygen species or easily repair the resulting damage.

In a preferred embodiment, the disorders and/or diseases related to oxidative stress are selected from the group containing cancers, neurodegenerative diseases, cardiovascular diseases, atherosclerosis, aging and other pathophysiological conditions associated with oxidative stress such as treatment with extracorporal organ substition methods (dialysis, heart-lung machine).

In a more preferred embodiment, the disorder and/or disease related to oxidative stress is cancer. In an especially preferred embodiment, the cancer is selected from the group consisting of colon cancer, bladder cancer, lung cancer, breast cancer, prostate cancer, endometrial cancer, and gastrointestinal tract cancer.

In a further aspect, the present invention relates to foodstuff that is enriched with N-methylpyridinium (NMP) by the addition of said NMP-containing extract according to the present invention.

The term "foodstuff" as used herein relates to any substance that can be eaten or drunk by an animal or a human for example for nutrition and/or pleasure.

In an especially preferred embodiment, the foodstuff is coffee.

Furthermore, the present invention also relates to a coffee blend comprising at least to different coffees that are roasted by different methods and/or to different degrees. Preferably, the coffee blend of the present invention comprises two different coffees that are of the same provenance. In another embodiment, the coffee blend of the present invention comprises two different coffees that are of different provenance. The coffees can be selected from the group containing Arabica Brasil coffee, Arabica Columbia coffee, and Robusta coffee.

In a preferred embodiment, the different roasting methods comprise fluidized bed roasting and drum roasting. The different roasting degrees comprise a light to middle dark degree of roasting, and a dark to very dark degree of roasting. Preferably, the coffee blend according to the present invention is composed of 25% (wt/wt) coffee that has been roasted by fluidized bed roasting to a light to middle dark degree, and 75% (wt/wt) coffee that has been roasted by drum roasting to a dark degree.

The method for producing such a coffee blend comprise roasting green coffee beans in a first set of roasting in a fluidized bed roaster (representing a predominant energy transfer to the coffee beans by convection) within 1.5 to 3 minutes to a roast colour of 70 to 90 scalepoints, and roasting green coffee beans in a second set of roasting in a drum roaster (representing an energy transfer to the coffee beans by conduction and convection) within 10 to 30 minutes reaching a roast colour of 40 to 60 scalepoints. Particularly, the coffee blend of the present invention is made by roasting green coffee beans in a first set of roasting in a fluidized bed roaster (representing a predominant energy transfer to the coffee beans by convection) within 1.5 to 3 minutes to a roast colour of 70 to 90 scalepoints. In a second set of roasting green coffee beans were roasted in a drum roaster (representing an energy transfer to the coffee beans by conduction and convection) within 10 to 30 minutes reaching a roast colour of 40 to 60 scalepoints.

Preferably, the coffee blend consists of Brasil coffees.

More preferably, the coffee blend is characterized by a low trigonelline content, a high chlorogenic acid content, and a very high N-methylpyridinium (NMP) content and niacin content. In an especially preferred embodiment, the coffee blend contains at least 73 µg/ml NMP.

The figures show:

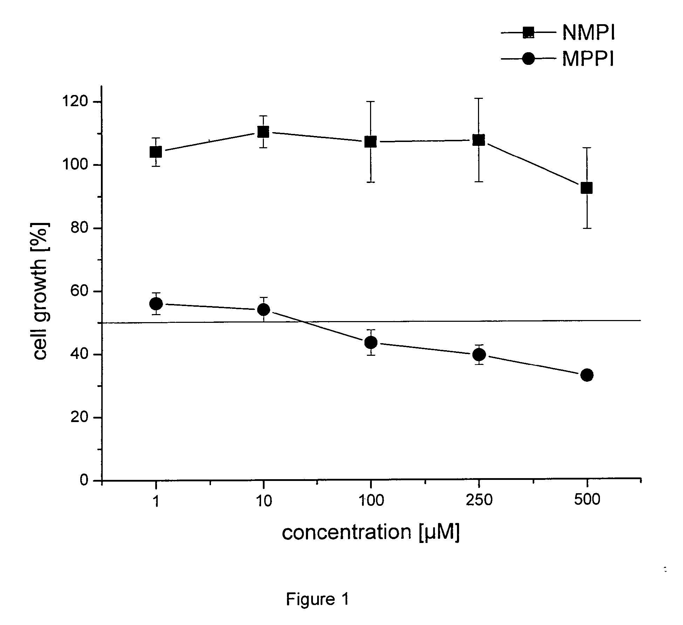

Figure 1: Inhibition of cell growth by 1-methyl-4-phenylpyridinium iodide (MPPI) and NMPI. Growth inhibition was determined using a sulforhodamine B (SRB) assay. HT29 cells were incubated for 24h with the respective compounds. Growth inhibition was calculated as survival of treated cells over control cells (treated with the vehicle 1% DMSO) x 100 (T/C %). The values given are the means ± SD of at least three independent experiments.

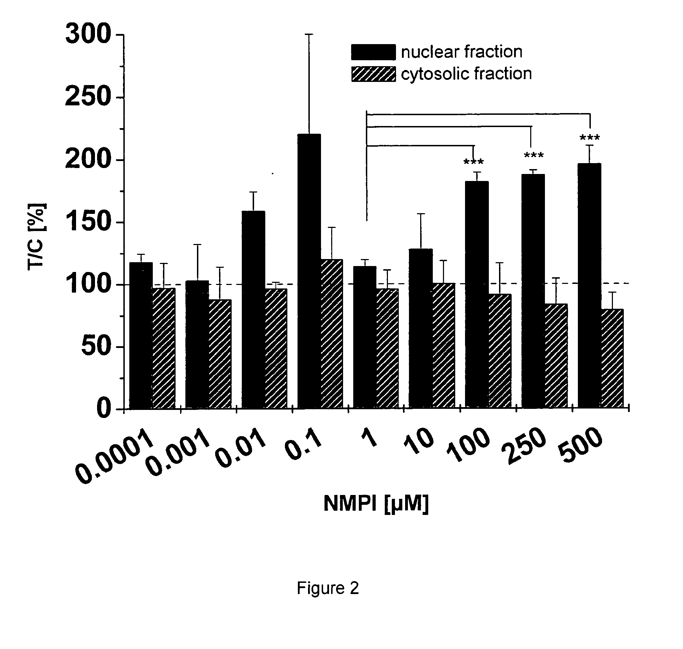

Figure 2: Western blot analysis of Nrf2 in HT29 cells after 3h treatment with NMP. α-tubulin was included in the test as a loading control. The data presented are the mean ± SD of at least three independent experiments with similar outcome. The significances indicated refer to the comparison of the respective concentration with the solvent control (100%);* = p<0.05; ** = p < 0.01; *** = p <0.001).

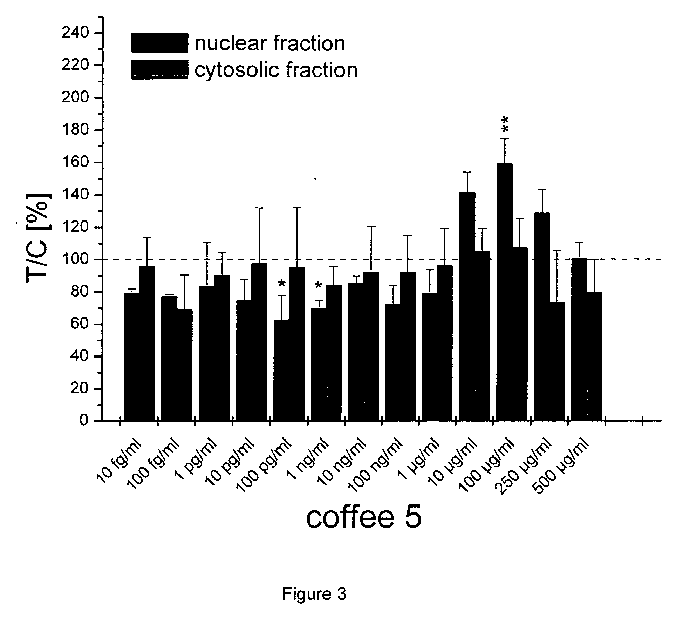

Figure 3: Western blot analysis of Nrf2 in HT29 cells after 3h treatment with NMP-rich coffee (coffee 5). α-tubulin was included in the test as a loading control. The data presented are the mean ± SD of at least three independent experiments with similar outcome. The significances indicated refer to the comparison of the respective concentration with the solvent control (100%);* = p<0.05; ** = p < 0.01; *** = p <0.001).

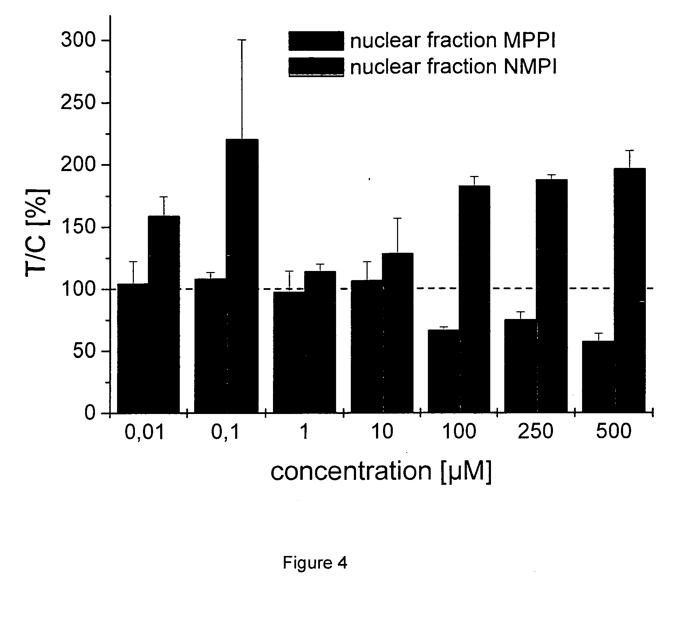

Figure 4: Western blot analysis of Nrf2 nuclear concentration in HT29 cells after 3h treatment with MPPI and NMPI. α-tubulin was included in the test as loading control. The data presented are the means ± SD of at least three independent experiments with similar outcome. Effects were calculated as survival of treated cells over control cells (treated with the vehicle 1% DMSO) x 100 (T/C %).

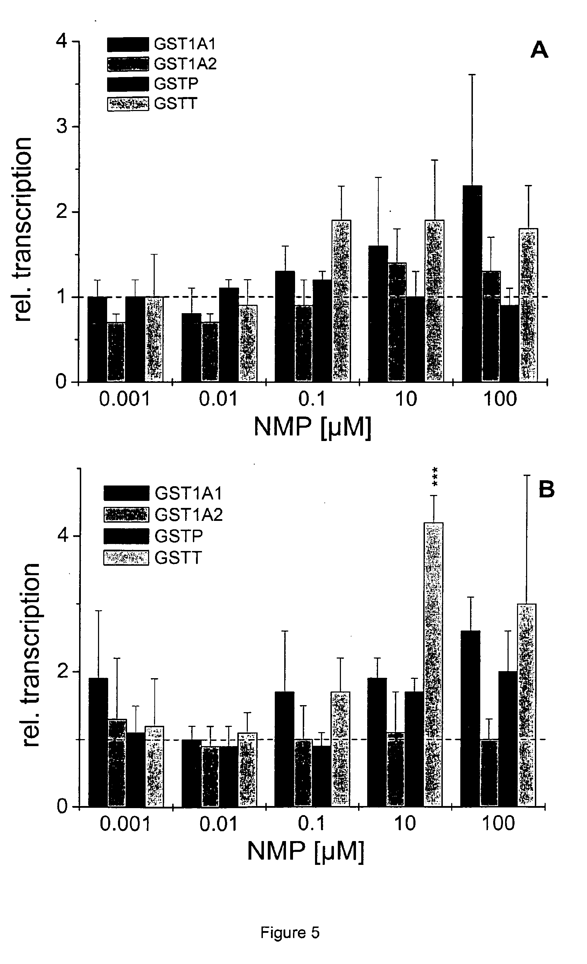

Figure 5: Real time PCR of GST1 A1, -A2, -P, -T gene transcription in HT29 cells after 3h (A) and 24h (B) treatment with NMPI. The data presented are the mean ± SD of four independent experiments in a double measurement with similar outcome. Relative transcription of the solvent control (1% DMSO) equals 1. The significances indicated refer to the comparison of the respective concentration with the solvent control (* = p<0.05; ** = p < 0.01; *** = p <0.001).

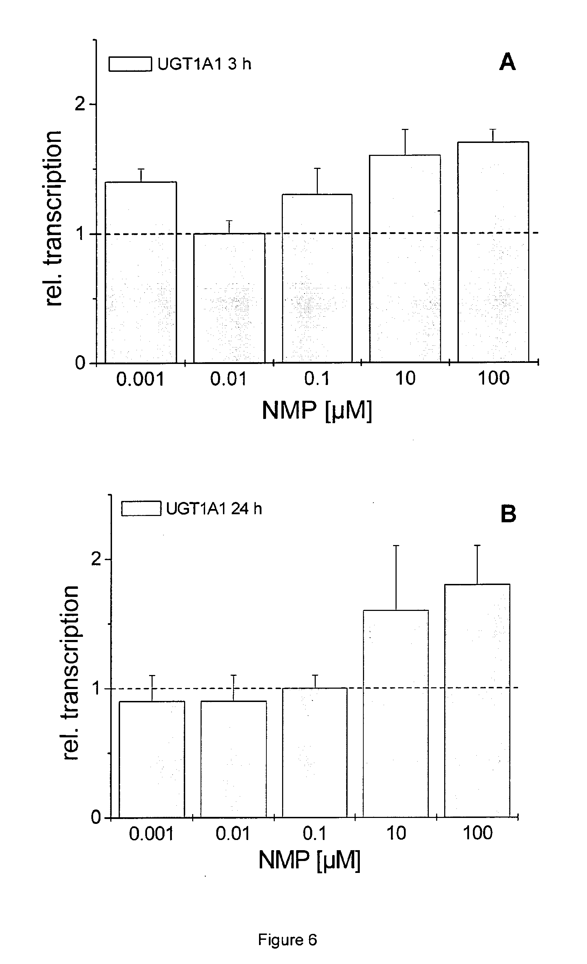

Figure 6: Real time UGT1A1 gene transcription in HT29 cells after 3h (A) and 24h (B) treatment with NMPI. The data presented are the mean ± SD of four independent experiments in a double measurement with similar outcome. Relative transcription of the solvent control (1% DMSO) equals 1. The significances indicated refer to the comparison of the respective concentration with the solvent control (* = p<0.05; ** = p < 0.01; *** = p <0.001).

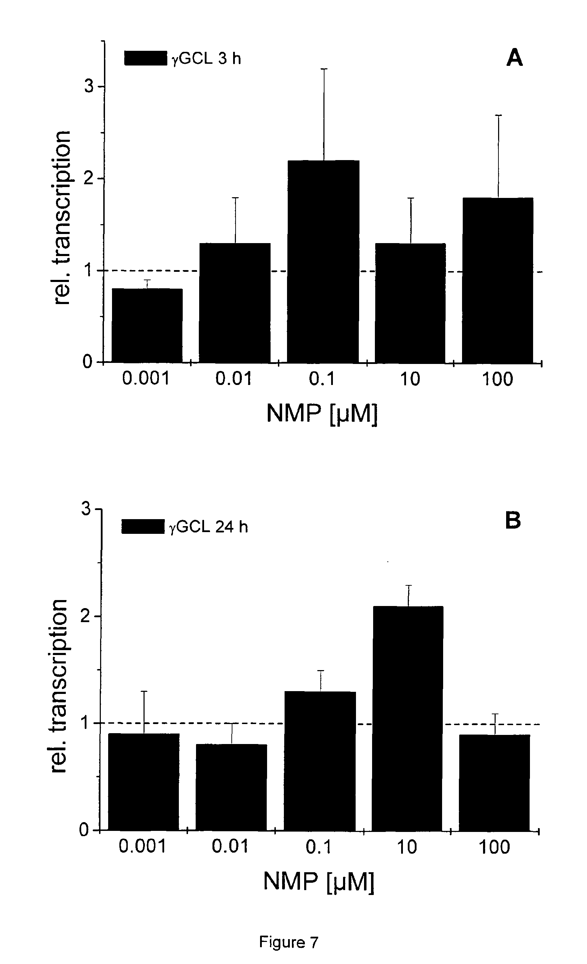

Figure 7: Real time γGCL gene transcription in HT29 cells after 3h (A) and 24h (B) treatment with NMPI. The data presented are the mean ± SD of four independent experiments in a double measurement with similar outcome. Relative transcription of the solvent control (1% DMSO) equals 1. The significances indicated refer to the comparison of the respective concentration with the solvent control (* = p<0.05; ** = p < 0.01; *** = p <0.001).

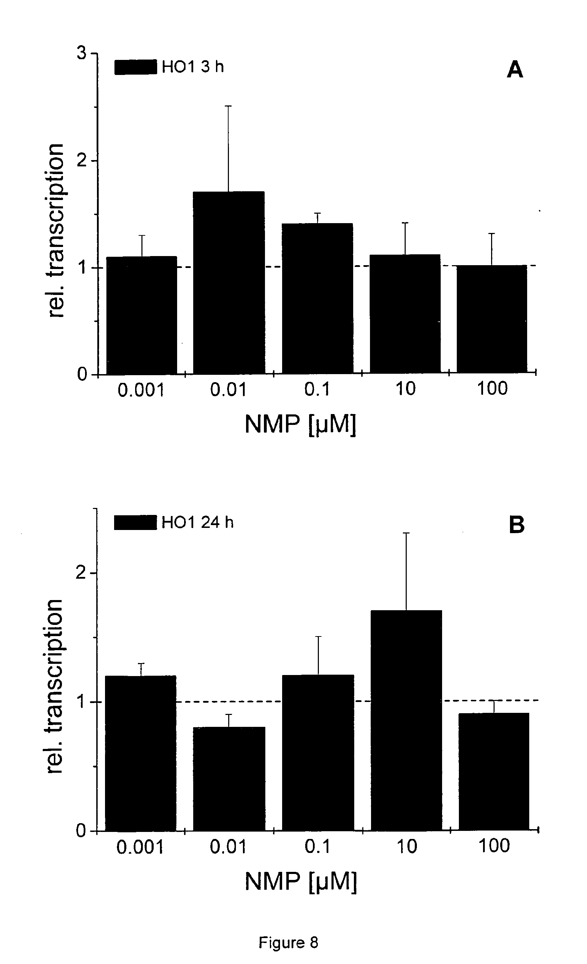

Figure 8: Real time HO1 gene transcription in HT29 cells after 3h (A) and 24h (B) treatment with NMPI. The data presented are the mean ± SD of four independent experiments in a double measurement with similar outcome. Relative transcription of the solvent control (1% DMSO) equals 1. The significances indicated refer to the comparison of the respective concentration with the solvent control (* = p<0.05; ** = p < 0.01; *** = p <0.001).

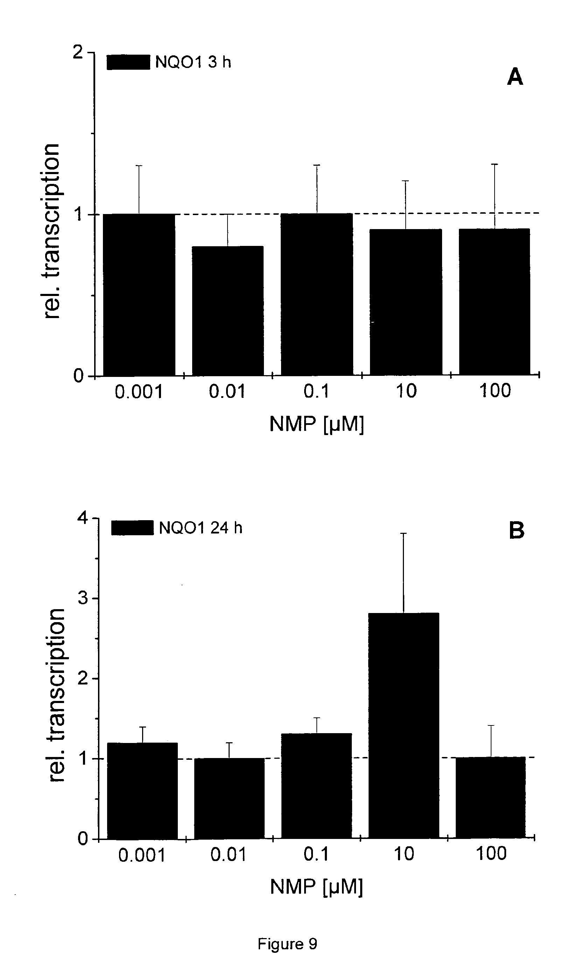

Figure 9: Real time NQO1 gene transcription in HT29 cells after 3h (A) and 24h (B) treatment with NMPI. The data presented are the mean ± SD of four independent experiments in a double measurement with similar outcome. Relative transcription of the solvent control (1% DMSO) equals 1. The significances indicated refer to the comparison of the respective concentration with the solvent control (* = p<0.05; ** = p < 0.01; *** = p <0.001).

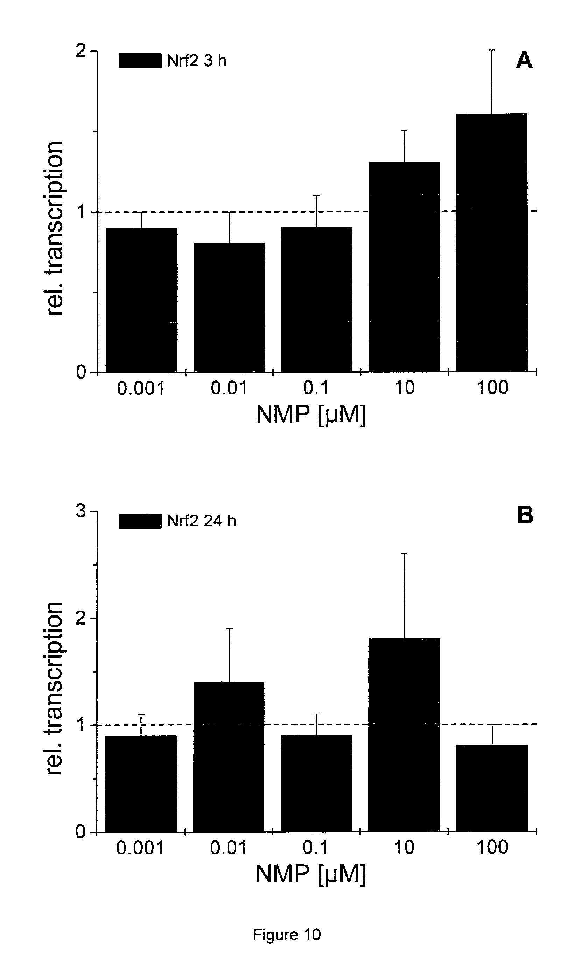

Figure 10: Real time Nrf2 gene transcription in HT29 cells after 3h (A) and 24h (B) treatment with NMPI. The data presented are the mean ± SD of four independent experiments in a double measurement with similar outcome. Relative transcription of the solvent control (1% DMSO) equals 1. The significances indicated refer to the comparison of the respective concentration with the solvent control (* = p<0.05; ** = p < 0.01; *** = p <0.001).

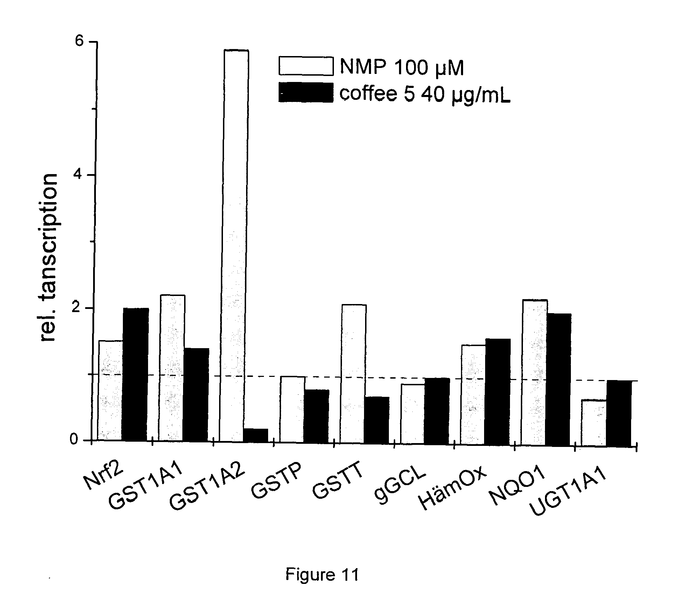

Figure 11: Real time PCR gene transcription of GST1 A1, -A2, -P, -T, _{Y}GCL, HO1, NQO1 and UGT1A1 in PBLs after 3h treatment with NMPI and 3h treatment with NMP-rich coffee (coffee 5). The data presented are a double measurement of a single experiment with similar outcome. Relative transcription of the solvent control (1% DMSO) equals 1.

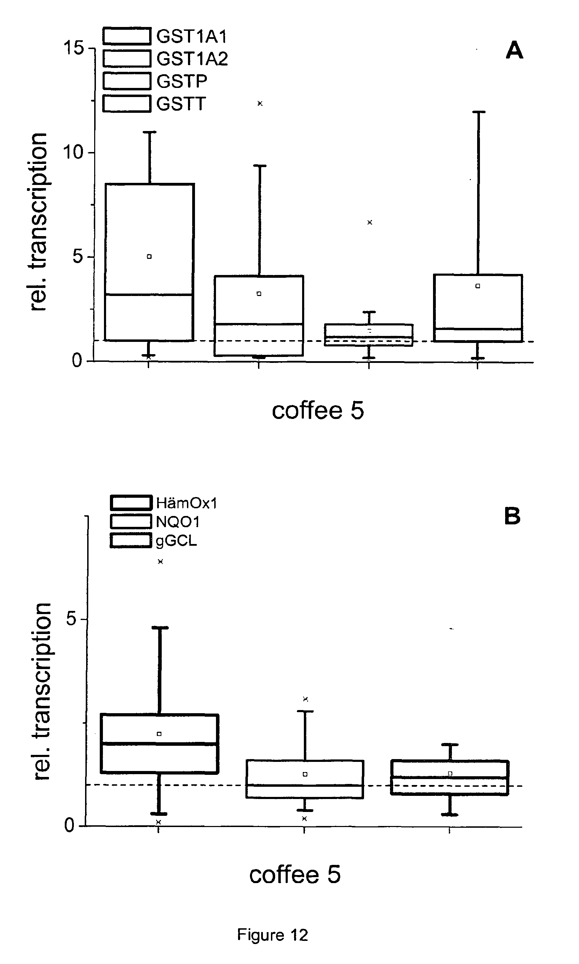

Figure 12: Real time PCR of GST1 A1, -A2, -P, -T (A) and _{Y}GCL, HO1, NQO1 (B) gene transcription in human PBLs after four weeks daily consumption of 500 mL NMP-rich coffee (coffee 5). The data presented are the median, mean ± SD of 18 independent experiments in a double measurement with similar outcome. Relative transcription wash-out (two weeks abstinence of coffee) equals 1.

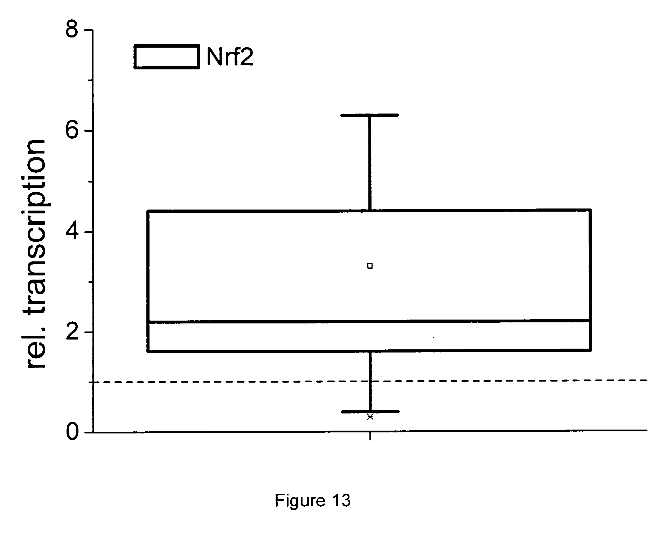

Figure 13: Real time PCR of Nrf2 gene transcription in human PBLs after four weeks daily consumption of 500 mL NMP-rich coffee (coffee 5). The data presented are the median, mean ± SD of 18 independent experiments in a double measurement with similar outcome. Relative transcription wash-out (two weeks abstinence of coffee) equals 1.

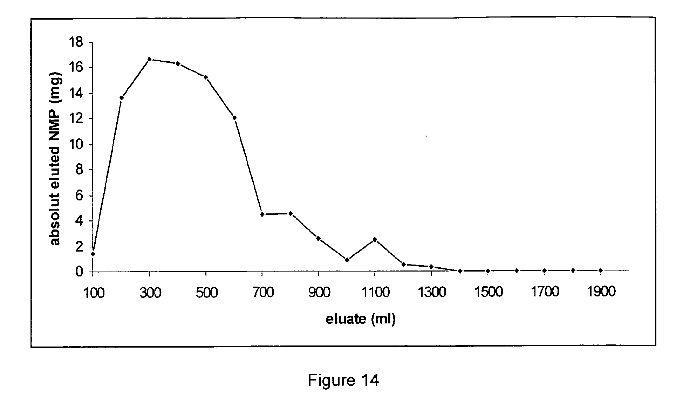

Figure 14: Profile of NMP elution applying 20% aqueous formic acid as eluent in fractionated elution.

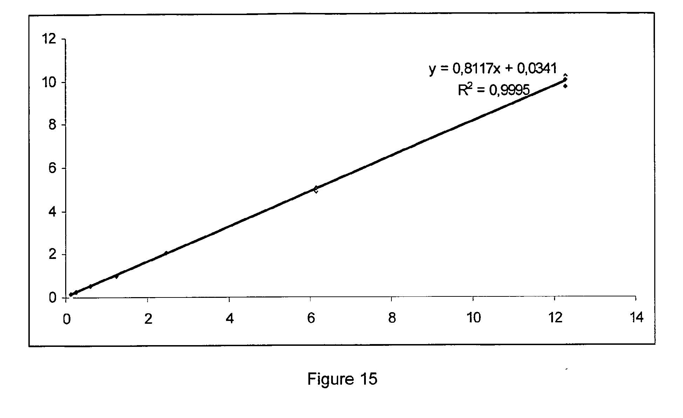

Figure 15: Calibration of d₃-NMP using unlabeled NMP to overcome adulterations originating from incompletely labeled internal standard. Each standard mixture was analyzed in quadruplicate. Equation is obtained by linear regression analysis. Y-axis: ratio (area NMP/ area d₃-NMP), x-axis ratio (concentration NMP/ concentration d₃-NMP).

The present invention will now be further illustrated in the following examples without being limited thereto.

### Examples

### Example 1: Cytotoxicity of NMPI

So far, only one pyridinium analogue has been reported as an activator of Nrf2: 1-methyl-4-phenylpyridinium iodide (MPPI). MPPI has been reported as an activator of oxidative stress by increasing intracellular ROS levels. It is well known that MPPI triggers cell death as a result of ROS generation. Due to the fact that the Nrf2/ARE pathway is activated by an increased ROS level and MPPI is structurally related to NMPI, the question on the cytotoxicity of both substances was addressed. In the sulforhodamine B (SRB) assay the cytotoxic effects of MPPI and NMPI on HT29 colon carcinoma cells were determined.

As shown in Figure 1, NMPI does not mediate growth inhibitory effects up to 500 µM, with 92.1 ± 12.8 % cell growth in the highest concentration. In contrast, MPPI strongly inhibits cell growth already at a concentration of 1 µM, decreasing cell growth to 32.7 ± 1.3 % at 500 µM. The data demonstrate that MPPI and NMPI substantially differ with respect to their cytotoxic properties. Whereas MPPI is strongly cytotoxic, NMPI is well tolerated by the cells up to 500 µM.

### Example 2: Influence of NMPI and MPPI on Nrf2 in vitro

To investigate the influence of NMPI and a NMPI-rich coffee on the Nrf2/ARE pathway, Nrf2 translocation into the nucleus was determined in HT29 cells. The nuclear translocation of Nrf2 is the crucial step to successful Nrf2-mediated antioxidative signaling. Only increased concentrations of Nrf2 in the nucleus lead downstream to the onset of antioxidant phase II enzyme expression. Nrf2 translocation was investigated after 3 h incubation by Western blot analysis.

NMPI leads already in nanomolar concentrations (0.1 µM) to an increased Nrf2 concentration in the nuclear fraction without decrease of the cytosolic Nrf2 protein content (Figure 2). An influence of NMPI on the *de novo* synthesis of Nrf2 has to be considered since there is no loss of Nrf2 in the cytosolic fraction. In a second maximum, Nrf2 translocation into the nucleus was observed in a concentration-dependent manner from 100 µM up to 500 µM, accompanied by a decrease of Nrf2 in the cytosolic fraction.

To understand the impact of NMP on the Nrf2/ARE activating properties of coffee, coffee 5, a coffee high in NMP, was also tested with respect to Nrf2 translocation. At low concentrations coffee 5 does not significantly influence the Nrf2 nuclear translocation in HT29 cells. However, consistent with the results of NMPI, the NMP-rich coffee also induces Nrf2 translocation concentration dependent from 10 µg/mL up to 250 µg/mL. Moreover, a weak increase of cytosolic Nrf2 protein is observed, probably indicating *de novo* synthesis of Nrf2 protein in the cytosol (Figure 3).

To investigate whether MPPI, as a known toxic substance which induces oxidative cell stress also influences Nrf2 translocation, Western blot analysis after 3 h incubation with MPPI was performed. As shown in Figure 4, MPPI, in comparison to NMPI shows no effect on the nuclear translocation of Nrf2 between 0.01 and 10 µM MPPI. However in higher concentrations (100 - 500 µM) MPPI strongly decreases cytosolic and nuclear Nrf2 protein which may be due to the observed cytotoxic effects.

### Example 3: Influence of NMPI on ARE-dependent genes

The question whether the induction of Nrf2 nuclear translocation by NMPI (Figure 2) in human colon carcinoma cells causes the onset of the transcription of selected ARE-dependent genes, such as GST-isoenzymes GST1A1, -A2, -P and -T, was investigated by real time PCR gene expression analysis. Only an increased gene transcription of these antioxidative enzymes can protect the cells effectively from oxidative attacks. To investigate whether the modulation of the transcription can be seen as a result of enhanced Nrf2 nuclear translocation, the incubation time and the NMPI concentrations were aligned to the translocation studies. Furthermore a 24h incubation was added to examine long term effects on gene transcription. Of note, the induction of GST1A1 and GSTT transcription after 3h NMPI incubation is concentration-dependent and up to a maximum of 3 to 3.5 fold (100 µM) (Figure 5). Furthermore, the induction of ARE-mediated transcription raises up to 24h and appears even more distinct since GSTP transcription is also induced at 10 - 100 µM NMPI (Figure 5B).

Furthermore, γGCL, HO1 NQO1 and UGT1A1, as four ARE-dependent genes, were also tested on transcriptional changes after 3h and 24h incubation with NMPI. As shown in Figure 6A, 3h incubation of NMPI leads from 10 to 100 µM to an increase of UGT1A1 transcripts which indicates that the nuclear translocation of Nrf2 downstream leads to enhanced antioxidative signaling. Furthermore, this effect seems also to prolong up to 24h (Figure 6B).

In an additional experiment, _{Y}GCL, as a further Nrf2-regulated antioxidative phase II enzyme, was tested on transcriptional changes after 3h incubation with NMPI. As shown in Figure 7A, already very low concentrations of NMPI (0.1 µM) lead to a strong induction of γGCL transcription, whereas higher concentrations seem to be without any significant effect. Long term incubation with NMPI shows also an effective increase of γGCL transcripts, but seems to occur in higher concentrations of 10 µM with an induction of over 2-fold.

The subsequent studies on transcriptional changes in HO1 gene transcription showed a very distinct influence of NMPI on this gene. Short time incubation of NMPI (3h) led only in very low concentrations of 0.01 µM to a slight increase in HO1 transcription (Figure 8A). Long term incubation with NMPI seems to shift this effect to higher NMPI concentrations of 10 µM (Figure 8B).

NQO1 is also discussed as very sensitively regulated by the transcription factor Nrf2 and was therefore tested by real time PCR. As shown in Figure 9, A and B, only 24h incubation with NMPI seems to affect gene transcription of NQO1 10 µM NMPI strengthens NQO1 transcription about 3-fold.

In summary, the here shown data indicate that NMPI does not only lead to a strong induction of Nrf2 nuclear translocation. This antioxidative signaling is transferred downstream and leads to a strong induction of different ARE-mediated genes. In addition, these effects seem to be not only a short time induction (3h) of antioxidative and detoxifying protection since the observed transcriptional changes appear even stronger after 24h incubation with NMPI.

### Example 4: NMPI-induced de novo synthesis of Nrf-2

The Nrf2 concentration in the cytoplasm is closely regulated by the balance between Nrf2 protein *de novo* synthesis and proteasomal Nrf2 protein degradation. This leads, by allowing the rapid turnover of Nrf2, to a constant Nrf2 concentration in the cytoplasm under unstressed conditions. It is known that oxidative/electrophile stress provokes the nuclear accumulation of de *novo*-synthesized Nrf2 protein. To address the question whether nuclear translocation of Nrf2 by NMPI is fortified by an increased *de novo* synthesis of Nrf2, the level of Nrf2 transcripts were determined by quantitative real time PCR. The incubation of HT29 cells with NMPI for 3h caused an increase in Nrf2 transcripts at 10 to 100 µM in comparison to the solvent control indicating a potential for Nrf2 *de novo* synthesis (Figure 10A). To investigate long term modulation of Nrf2 gene transcription by NMPI, 24h incubation was determined. As shown in Figure 10B, NMPI incubation leads to at least 1.8-fold increased transcription of Nrf2 at 10 µM.

### Example 5: Influence of NMPI on human peripheral blood lymphocytes ex vivo

*In vitro* studies allow promising conclusions on the influence of the tested substance on the cells and help to answer mechanistic questions. But only *in vivo* studies can proof whether these effects are valid for the whole organism. A way to get there are *ex vivo* experiments where peripheral blood lymphocytes (PBL) are isolated and afterwards incubated with the respective substances.

The question whether ARE-dependent transcription of antioxidative genes may also be induced by NMPI and NMP-rich coffee in human PBLs was addressed using SYBR green real time PCR. Incubation of PBLs for 3h with 100 µM NMPI caused potent induction of GST1A1-, -A2- and -T-transcription. Furthermore, signals for H01- and NQO1-transcripts were as well increased in PBLs up to 1.5- respectively 2.3-fold (Figure 11). Incubation of PBL with 40 µg/mL NMP-rich coffee (coffee 5) resulted in a slight induction of GST transcription but H01- and NQO1-transcription was raised up to 1.5- respectively 2.1-fold (Figure 11). The increase of HO1 and NQO1 transcripts is comparable between NMPI and the NMP-rich coffee whereas from the set of GST isoforms only GST1A1 is induced by coffee 5.

To examine whether the induction of Nrf2 transcripts in HT29 cells by NMPI and coffee 5 is also of relevance in non-transformed cells, Nrf2 transcription was examined in freshly isolated human PBLs, 3h incubated with NMPI and coffee 5. As shown in Figure 11, the isolated compound NMPI as well as the NMP-rich coffee 5 strongly increased Nrf2 transcript levels by 1.5- respectively 2.1-fold.

### Example 6: Influence of NMP-rich coffee in vivo

Within a four weeks human intervention study, test persons daily consumed 500 mL freshly brewed coffee 5. The subsequent isolation of PBLs allowed examining the influence of this diet on selected ARE-dependent gene transcripts in comparison to a two week wash-out period with no coffee consumption. As shown in Figure 12, consumption of NMP-rich coffee leads to a strong onset of detoxifying phase II gene transcription. Various GST isoenzymes, such as GST1A1, -A2 and -T were raised in their transcripts. Furthermore HO1 and γGCL were up regulated about 2.3-respectively 1.7-fold.

To examine whether the *in vitro* and *ex vivo* induction of Nrf2 transcripts after incubation with NMPI and NMP-rich coffee could also been seen *in vivo* in the PBLs of the test persons who took part in the four week intervention study, Nrf2 transcription was also determined. The four week consumption of the NMP-rich coffee 5 lead in the majority of test persons to a potent increase of Nrf2-transcripts. As shown in Figure 13, Nrf2 transcription was in the mean raised up to 3.2-fold. This result indicates that the above seen induced transcription of important ARE-mediated genes is also supported by a potent induction of Nrf2 transcription in human PBLs after four weeks consumption of coffee 5. This can be concluded as a strengthening of antioxidative signaling which is mediated through the induction of the Nrf2 activation. Furthermore the Nrf2/ARE pathway may therefore be the underlying mechanism by which NMPI and NMP-rich coffee leads to an activation of protection against oxidative stress.

### Example 7: Experimental protocol for food-grade isolation of a NMP-rich extract from roast coffee

50 g (1 eq.) of coffee powder, roasted for 5 minutes at 260 °C, was stirred with freshly boiled water (T ≈ 90°C - 95°C, 150 ml, 3 eq., Millipore quality) for 15 minutes. The suspension was filtered through whatman filter paper under vacuum yielding the coffee solution. The filter cake was washed with water (25 ml, 0.5 eq) and the filtrates were combined. To the filtrate, polyamide powder (10 g, 0.2 eq.) was given and the mixture was stirred for 15 minutes, then left standing at 4°C for 15 minutes. The suspension was filtered through Whatman filter paper under vacuum yielding a clear solution free of particles or colloids. The filter cake was washed with water (25 ml, 0.5 eq) and the filtrates were combined. The solution was applied on a column (3 cm x 50 cm, with water cooling, P3 frit) of cation exchange resin Purolite® C104E (weak cation exchange resin, hydrogen form, 250 ml, 1 bedvolume (BV)) pre-treated following the manufacturer's protocol. The dripping speed was set to = 2 BV/h. When the coffee solution had passed the column, the resin was washed with demineralized water (4 BV, Millipore quality) followed by elution with aqueous formic acid (20 %, 4 BV) or 1 M hydrochloric acid (2 BV).

The extract obtained by this procedure contained >74 % of the NMP present in the coffee powder used for isolation.

### Example 8: Isolation of an NMP-rich extract from roasted coffee

### Extraction of NMP from roast coffee powder

The initial content of NMP in the roast coffee powder used for isolation purposes was determined by HPLC-MS/MS analysis using stable isotope dilution analysis (cf. Example 9). Coffee powder was extracted with hot water in a coffee making machine and the brew was analysed for determination of a reference figure. The concentration was 73.7 mg/l±4.9%. Backcalculating to the amount of coffee powder (48 g/900 ml, resulting in 800 ml beverage) this was a concentration of 1.23 mg/g. Analysis of the solutions obtained after extraction of coffee powder as detailed in Example 7, revealed an extracted yield of NMP of 100±7.8 % (from 5 individual workups), that is 1.1 to 1.4 mg/g NMP in the coffee powder (cf. Table 1).

**Table 1: Extraction yields of N-methylpyridinium**

| **Sample** | **Yield (mg/g)*** | **Yield (%)** |
|---|---|---|
| Reference (n=2) | 1.23±4.9 | 100 |
| #1 | 1.25 | 102.0 |
| #2 | 1.23 | 99.8 |
| #3 | 1.35 | 109.7 |
| #4 | 1.24 | 100.5 |
| #5 | 1.08 | 88.0 |
| Mean (±RSD) | 1.27±4.4 | 100.0±7.8 |

| | | |
|---|---|---|
| * yield means concentration of NMP in the brew obtained by extraction of the coffee powder relative to the amount of coffee powder. Data are means of replicates ± relative standard deviation (%). | | |

### Treatment with polyamide

The coffee extract obtained was treated with polyamide powder and filtered resulting in a clear solution free of particles and colloids. Treated this way, the brew was stable for 10 days at ambient temperature, and no precipitate occurred.

Analysis of the solutions obtained after treatment of the coffee brews with polyamide as detailed in Example 7 revealed a recovery of 100.5±5.8 % in this purification step and a concentration of NMP of 97.6±2.8 % relative to the initial coffee content (data from 5 individual workups, cf. Table 2). The clear solution was fractionated with cation exchange chromatography without further pre-treatment.

**Table 2: Yields of NMP after treatment with polyamide**

| **Sample** | **Yield (mg/ml)** | **Yield (%)*** | **Recovery (%)**** |
|---|---|---|---|
| Reference (n=2) | 1.23±4.9 | 100 | |
| #1 | 1.17 | 93.5 | 95.4 |
| #2 | 1.22 | 99.2 | 99.1 |
| #3 | 1.34 | 99.1 | 108.9 |
| #4 | 1.22 | 98.4 | 98.9 |
| #5 | 0.95 | 87.9 | 77.4 |
| Mean (±RSD) | 1.24±5.8 | 97.6±2.8 | 100.5±5.8 |

| | | | |
|---|---|---|---|
| *Yield means concentration of NMP in the brew obtained by extraction of the coffee powder relative to the amount of coffee powder. **Recovery means recovered NMP relative to the extracted NMP. Data are means of replicates ± relative standard deviation (%). | | | |

### Cation exchange isolation (column method)

The capacity of the cation exchanger used was sufficient to cover the cation content of a solution obtained from 100 g extracted coffee powder. Neither in the eluate, nor in the rinsing fraction any NMP could be detected by HPLC-MS/MS.

Fractionated elution with 20 % aqueous formic acid was performed to assess the minimum volume for quantitative elution of NMP from the exchanging column (Figure 14). NMP recovered by elution of the cation exchanger column was 84 % based on HPLC-MS/MS analysis of the eluates, equalling 74.0 % of the NMP content in the coffee powder used for isolation.

Elution with 1 M HCl was assessed as alternative to the aqueous formic acid. Fractionated elution with five 100 ml aliquots of 1 M HCl revealed a recovery of 83.2 % based on the NMP content of the solution applied on the cation resin (77.8 % based on coffee powder) (cf. Table 3).

**Table 3: Yields of NMP separated from the coffee powder by complete workup**

| **Eluent (volume)** | **Absolute yield (mg)*** | **Yield (%)**** |
|---|---|---|
| NMP content in 50 g test coffee | 61.5 | 100 |
| 20% aqueous formic acid (2000 ml) | 45.6 | 74.1 |
| 1 M hydrochloric acid (500 ml) | 48.5 | 78.9 |

| | | |
|---|---|---|
| *separated from 50 g coffee powder. ** relative to the reference concentration in the coffee powder | | |

### Cation exchange isolation (batch method)

To evaluate a batch method for the cation exchange step, an aliquot of a coffee extract pre-treated with polyamide was stirred with the cation exchange resin, which was then filtered off and washed with water prior to elution with 1 M hydrochloric acid. The procedure was repeated, e.g. the filtrate was again stirred with exchange resin, which was again filtered off, washed and eluted. The eluted fractions were analysed for N-methylpyridinium (cf. Table 4).

**Table 4: Results from evaluation of a batch method**

| **Fraction** | **absolute NMP in the fraction (mg)** | **Yield (%)** |
|---|---|---|
| Coffee extract (200 ml) | 27.2 | 100 |
| eluted fraction 1 | 9.52 | |
| eluted fraction 2 | 1.82 | |
| | Σ 11.34 | 41.7 |

### Example 9: Analysis of NMP in extracts and coffee brew

To analyse the N-methylpyridinium ion in roast coffee matrix, a method based on stable isotope dilution analysis well known in the art was successfully applied. Analyte and internal standard were synthesized by reaction of pyridine with either methyliodide, respectively the triply deuterated analogue (99.5 % deuterium). To compensate for incompletely deuterated d₃-N-methylpyridinium, a calibration function was constructed by plotting area ratios versus concentration ratios of standard mixtures covering the complete area of expected concentrations in authentic coffee fractions/samples (Figure 15).

Sample preparation involved separation of the analyte and the internal standard from matrix compounds by solid phase extraction on cation exchange material and resulted in clear, uncolored solutions which were ready for HPLC-MS/MS analysis after dilution. The HPLC-method was shortened to 10 minutes of analysis to allow a higher throughput of samples.

### Quantitative analysis

*HPLC-MS*/*MS.* The Agilent 1200 Series HPLC-system consisted of a pump, a degasser and an autosampler (Agilent, Waldbronn, Germany) and was connected to a 3200 API triple quadrupole (Applied Biosystems/MDS Sciex, Darmstadt, Germany) with an electrospray ionization (ESI) device running in positive ionization mode. Nebulizer gas and curtain gas were nitrogen and set at 65 psi and 25 psi, respectively. Heater gas was set at 60 psi, the temperature was 350 °C. Detection was performed in multiple reaction monitoring (MRM) mode, recording the transitions from the parent ion [M]⁺ to the fragments after collision-induced dissociation. For tuning, aqueous solutions of NMP and trideuterated NMP were individually infused using a syringe pump at a flow of 10 µl/min and the parameters for the mass transitions were optimized using the "quantitative optimization"-tool provided by the software (Analyst 1.4.1, Sciex, Toronto, Canada). Analyte: *mlz* 94 → *mlz* 79, *m*/*z* 78, *mlz* 52, internal standard *m*/*z* 97 → *mlz* 79*, mlz* 78*, mlz* 52. The declustering potential (DP) was 50, the cell exit potential (CXP) was 15, and the collision energy (CE) was 33. The dwell time for each mass transition was 100 ms. The quadrupoles operated at unit mass resolution, ion spray voltage was 5500 V. Chromatography was on a GROM-Sil80 SCX column (50 mm x 2 mm, 5 µm, Grom, Herrenberg, Germany) at a flow of 400 µl/min with isocratic elution (10 min). Aqueous methanol (50%) containing ammoniumacetate as modifier (50 mM) was used.
*Calibration:* To compensate for incompletely deuterated d₃-N-methylpyridinium, mixtures of the analyte and the internal standard ranging from ratios 0.1/1 to 10/1 on a molar basis were analyzed in absolute concentrations which were expected in the coffee samples. Each standard was analyzed in quadruplicate and the area ratios (Analyte/internal standard) were plotted against the concentration ratios (Analyte/internal standard). Linear regression delivered the equation y=0.8117x+0.0341 (R²=0.9995). The equation was applied for calculations for quantitative analysis.
*Sample preparation for analysis of NMP in extracts and coffee brew.:* An aliquot of the fractions collected, respectively the unfractionated coffee brew and the polyamide-treated coffee brew, was spiked with the internal standard d₃-N-methylpyridinium (1.5 µmol/ml, 100 µl/ml sample). After dilution (1 +9, v/v with water), an aliquot (1ml) was applied on a SPE-cartridge (CBA, 1 g, 6 ml, Varian, Darmstadt) preconditioned with methanol and water (5 ml each). After rinsing with water and methanol (5 ml each), analyte and internal standard were eluted with aqueous formic acid (2 N). The eluate was diluted (1+4, v/v with water) and analysed by HPLC-MS/MS.

### Example 10: Quantitative analysis of extracts isolated

Trigonelline was determined by means of stable isotope dilution analysis with d₃-trigonelline, synthesized from nicotinic acid and d₃-methyliodide as internal standard. An aliquot (50 µl) of an aqueous solution of the extract (3 mg/ml) was spiked with d₃-trigonelline (1 mM, 25 µl) and diluted with water to a final volume of 50 ml. 5 µl were analyzed by HPLC-MS/MS.

NMP was determined by means of stable isotope dilution analysis with d₃-NMP synthesized from pyridine and d₃-methyliodide as internal standard. Quantitative analysis was performed as described in Example 9.

Catechol was determined by means of stable isotope dilution analysis with d₄-catechol, synthesized from catechol and deuteriumoxide, as internal standard. An aliquot (1 ml) of an aqueous solution of the extract (3 mg/ml) was spiked with d₄-catechol (3 mM, 1 µl). After equilibration and membrane filtration (0.45 µm), an aliquot (5 µl) was analyzed by HPLC-MS/MS.

Chlorogenic acid and caffeine: An aqueous solution of the extract (3 mg/ml) was diluted with water (1/10) and 10 µl were injected into a HPLC-DAD system (324 nm for CQA, 272 nm for caffeine). Quantitation was performed by external calibration using 5-chlorogenic acid and caffeine standard solutions.

Sodium, calcium, potassium, magnesium: An aqueous solution of the extract (3 mg/ml) was used for analysis. The compounds were quantitated by inductive coupled plasma (ICP) with external calibration. The wavelengths applied were 317.933 (calcium), 766.490 (potassium), 285.213 (magnesium), and 589.592 (sodium).

### Example 11: Characterization of the extract isolated

The lyophilized material obtained by elution after cation exchange chromatography was analyzed for anorganic cations, chlorogenic acids, caffeine, trigonelline, N-methylpyridinium and catechol (cf. Table 5).

Dataset A: Data was obtained from extracts obtained after extraction and treatment of coffee following the procedure of Example 7.

Dataset B: Data was obtained from extracts obtained after extraction and treatment of coffee following the procedure of Example 7 and additional extraction with ethylacetate.

**Table 5: Analytical characterization of extracts**

| | **HCl eluate** | | **Formic acid eluate** | |
|---|---|---|---|---|
| | **A** | **B** | **A** | **B** |
| Yield of isolate | 4,2 | 4,0 | 6,2 | 5,8 |
| (g from 100 g coffee) | | | | |
| Properties | brown, amorphous, hygroscopic material | | brown, amorphous, hygroscopic material | |

| | **Organics (mg/g of isolate)** | | | |
|---|---|---|---|---|
| Trigonelline | 2,02 | 2,13 | 2,51 | 2,68 |
| N-Methylpyridinium | 25* | 26* | 19** | 20** |
| Chlorogenic acid | 0,7 | 0,8 | 2,9 | 3,1 |
| Catechol | <0.01 | <0.01 | <0.01 | <0.01 |
| Caffeine | 47,3 | 10,7 | 85,5 | 9,9 |

| | **Minerals (mg/g of isolate)** | | | |
|---|---|---|---|---|
| Sodium | 0,06 | 0,07 | 88 | 94 |
| Potassium | 28,1 | 30,0 | 255 | 273 |
| Calcium | 0,60 | 0,63 | 5,60 | 5,98 |
| Magnesium | 2,11 | 2,22 | 21,0 | 21,4 |

| | | | | |
|---|---|---|---|---|
| * 85% of total NMP in 100 g coffee; ** 96% of total NMP in 100 g coffee | | | | |

To sum up, NMP and related compounds have been identified as potent activators of Nrf2-mediated gene expression. The Nrf2/ARE pathway represents a fundamental mechanism by which cellular defense can be triggered. NMP and related substances effectively increase the expression of elementary detoxifying phase II enzymes by translocation of Nrf2 into the nucleus as well as the induction of Nrf2 *de novo* synthesis. These effects are not limited to *in vitro* test systems but are even more pronounced in humans. NMP, in its ionic form as NMP iodide (NMPI), represents a natural constituent in roasted trigonelline-containing material and its concentration can be triggered by modulation of the roasting conditions.

In *in vitro* cell culture as well as *in vivo* in rats, a chemoprotective effect of NMP by the induction of glutathione S-transferase (GST)-activity could be shown. In a human intervention study, test persons received a daily dose of 500 mL NMP-rich coffee for 4 weeks. In the peripheric lymphocytes of these test persons changes in gene expression and consequences for DNA integrity were monitored. The majority of the test persons showed an increased transcription of Nrf2 and a potent onset of the expression of important ARE-regulated phase II enzymes which are crucial for cellular defence. These results are in line with *in vitro* studies in HT29 colon carcinoma cells.

During the process of roasting various N-methylpicolinium products such as N-methyl 2-, -3-, and 4-piccolinium (NM2P, NM3P and NM4P) are generated. The content of these substances in the roasted coffee bean depends on the degree and the time of roasting. Testing of a modulation of Nrf2 nuclear translocation of NM2-,3- and 4PI showed effects on this pathway. An increase in total Nrf2 protein content, as well as a potent Nrf2 nuclear translocation was detected from 100 µM. The substances seem also to exhibit a positive influence on cells with respect to a protection against attacks from oxidative noxes and the augmentation of their concentration may be a promising way to generate a bioactive coffee beverage.

Nrf2 represents a promising target, by which the onset of cellular defense mechanisms against oxidative stress can be enhanced. Especially, the aim to identify bioactive food constituents protecting cells against attacks from electrophiles and ROS through the onset of the Nrf2/ARE pathway seems to be promising. So far, the majority of compounds which have been reported to induce Nrf2 translocation into the nucleus belong to the class of polyphenols. So far, NMP and related compounds have not been reported as activators of Nrf2/ARE-regulated gene expression. Hence, it seems to be very appealing to use NMP-rich extracts for the production of functional food products enhancing the natural defence mechanisms, as well as for the manufacture of medicaments for the prevention or reduction of oxidative stress and for the prevention of disorders and/or diseases related to oxidative stress.

## Claims

1. A method for producing a N-methylpyridinium (NMP)-containing extract from trigonelline-containing organic material, said extract containing at least 1.9% (w/w) NMP, the method comprising the steps of:
roasting the trigonelline-containing organic material at a temperature of at least 260°C for at least 3 minutes or at a temperature of at least 230°C for at least 4 minutes;
treating the roasted trigonelline-containing organic material with hot water to obtain an aqueous extract;
treating the aqueous extract obtained in step (b) with polyamide; and
applying the polyamide-treated aqueous extract of step (c) to cation exchange chromatography to obtain a NMP-containing extract.

2. The method according to claim 1, wherein step (a) comprises roasting the trigonelline-containing organic material at a temperature of 260°C for 5 minutes.

3. The method according to claim 1 or 2, wherein step (b) comprises treating the roasted trigonelline-containing organic material for 10 to 20 minutes with water having a temperature of 70°C to 97°C.

4. The method according to any one of claims 1 to 3, wherein step (c) comprises treating the aqueous extract with polyamide for 20 to 60 minutes.

5. The method according to any one of claims 1 to 4, wherein the trigonelline-containing organic material is selected from the group consisting of coffee, in particular *Coffea arabica, Coffea canephora, Coffea spp.,* and *Psilanthus spp.,* members of the *Fabaceae,* in particular *Pisum sativum, Glycine max, Phaseolus vulgaris, Lens culinaris, Cicer arietinum,* and *Trigonella foenum-graecum,* members of the *Chenopodiaceae,* in particular *Chenopodium quinoa,* and members of the *Poaceae,* in particular *Avena sativa.*

6. A N-methylpyridinium (NMP)-containing extract containing at least 1.9% (w/w) NMP, preferably at least 2.5% (w/w) NMP, obtainable by the method according to any one of claims 1 to 5.

7. A pharmaceutical composition comprising, in a therapeutically effective amount, a N-methylpyridinium (NMP)-containing extract according to claim 6, optionally in combination with one or more pharmaceutically acceptable excipient(s) and/or carrier(s) and/or diluent(s) and/or solvent(s) and/or salt(s) and/or buffer(s).

8. Use of the N-methylpyridinium (NMP)-containing extract according to claim 6 as a dietary supplement.

9. Use of the N-methylpyridinium (NMP)-containing extract according to claim 6 for the prevention or reduction of oxidative stress and/or for the prevention of disorders and/or diseases related to oxidative stress.

10. Use according to claim 9, wherein the disorders and/or diseases related to oxidative stress are selected from the group containing cancers, neurodegenerative diseases, cardiovascular diseases, atherosclerosis, aging and other pathophysiological conditions associated with oxidative stress.

11. Foodstuff containing the NMP-containing extract according to claim 6.

12. Foodstuff according to claim 11, wherein the foodstuff is a coffee.

13. A coffee blend comprising at least two coffees that are roasted by different methods and/or to different degrees.

14. The coffee blend according to claim 13 composed of 25% (wt/wt) coffee that has been roasted by fluidized bed roasting to a light to middle dark degree, and of 75% (wt/wt) coffee that has been roasted by drum roasting to a dark degree.

15. The coffee blend according to claim 13 or 14, wherein the coffee is a Brasil coffee.

16. The coffee blend according to claims 13 to 15, which is **characterized by** a low trigonelline content, a high chlorogenic acid content, and a very high N-methylpyridinium (NMP) content and niacin content.
